## Europäisches Patentamt

## European Patent Office

## Office européen des brevets

(11) Publication number: **0 225 740**
**B1**

(12) **EUROPEAN PATENT SPECIFICATION**

(45) Date of publication of patent specification: **09.05.90**

(51) Int. Cl.⁵: **G 21 C 7/10**

(21) Application number: **86308834.0**

(22) Date of filing: **12.11.86**

(54) **Flexible rods support structure for inner barrel assembly of pressurized water reactor.**

(30) Priority: **14.11.85 US 798220**

(43) Date of publication of application:
**16.06.87 Bulletin 87/25**

(45) Publication of the grant of the patent:
**09.05.90 Bulletin 90/19**

(84) Designated Contracting States:
**BE CH ES FR GB IT LI**

(56) References cited:
**EP-A-0 054 790**
**EP-A-0 128 091**
**EP-A-0 151 082**
**EP-A-0 195 686**

(73) Proprietor: **WESTINGHOUSE ELECTRIC CORPORATION**
**Westinghouse Building Gateway Center**
**Pittsburgh Pennsylvania 15235 (US)**

(72) Inventor: **Gillett, James Edwin**
**400 Wren Drive**
**Greensburg, PA 15601 (US)**
Inventor: **Sherwood, Donald Guyer**
**249 Lilac Drive**
**Monroeville, PA 15146 (US)**
Inventor: **Garner, Daniel Clark**
**3294 Woodhaven Drive**
**Murrysville, PA 15668 (US)**

(74) Representative: **van Berlyn, Ronald Gilbert**
**23, Centre Heights**
**London, NW3 6JG (GB)**

Courier Press, Leamington Spa, England.

## Description

This invention relates to pressurized water reactors and, more particularly, to a flexible support for the rod guides positioned within the inner barrel assembly of a pressurized water reactor.

Certain advanced designs of nuclear reactors incorporate at successively higher, axially aligned elevations within the reactor vessel, a lower barrel assembly, an inner barrel assembly, and a calandria, each of generally cylindrical configuration, and an upper closure dome. The lower barrel assembly may be conventional, having mounted therein, in parallel axial relationship, a plurality of fuel rod assemblies which are supported at the lower and upper ends thereof, respectively, by corresponding lower and upper core plates. Within the inner barrel assembly there is provided a large number of rod guides disposed closely spaced relationship, in an array extending substantially throughout the cross-sectional area of the inner barrel assembly. The rod guides are of first and second types, respectively housing therewithin reactor control rod clusters (RCC) and water displacer rodlet clusters (WDRC); these clusters, as received within their respectively associated guides, generally are aligned with the fuel rod assemblies.

The calandria includes a lower calandria plate and an upper calandria plate. The rod guides are secured in position at the lower and upper ends thereof respectively, to the upper core plate and the lower calandria plate. Within the calandria and extending between the lower and upper plates thereof is mounted a plurality of calandria tubes in parallel axial relationship and respectively aligned with the rod guides. A number of flow holes are provided in remaining portions of the lower calandria plate, intermediate the calandria tubes, through which passes the reactor core outlet flow as it exits from its passage through the inner barrel assembly.

In similar parallel axial and aligned relationship, the calandria tubes are joined to corresponding flow shrouds which extend to a predetermined elevation within the dome, and which in turn are connected to corresponding head extensions which pass through the structural wall of the dome and carry, on their free ends at the exterior of and vertically above the dome, corresponding adjustment mechanisms. The adjustment mechanisms have corresponding drive shafts which extend through the respective head extensions, flow shrouds, and calandria tubes and are connected to the respectively associated clusters of RCC rods and WDRC rods, and serve to adjust their elevational positions within the inner barrel assembly and, particularly, the level to which same are lowered into the lower barrel assembly and thus into association with the fuel rod assemblies therein, thereby to control the activity within the core.

A critical design criterion of such reactors is to minimize wear of the rodlets at interfaces between the individual rodlets of a given cluster and known support plate structures within the rod guide through which the rodlets pass for support, and thus to reduce or eliminate the factors which produce wear, such as flow induced vibration and associated vibration of reactor internal structures. Because of the relatively dense packing of the rod guides within the inner barrel assembly, it is critical to maintain substantially uniform distribution of the outlet flow from the reactor core, and an axial direction of that flow through the upper barrel assembly. Even if a uniform, axial flow of the core outlet is achieved, the effects of differential pressure and temperature across the array of rod guides, or an individual rod guide, can produce significant reaction loads at the support points, or support connections, for the rod guides. These reactor loads, coupled with the flow induced vibration create a high potential for wear of the rod guides, as well as the rodlets. Additionally, the provision of the calandria, and particularly the lower plate thereof, presents an interface with the top end of the rod guides which does not exist in conventional pressurized water reactors. That interface must be capable of accommodating differential thermal expansions between the lower calandria plate and the inner barrel in order to prevent large thermal stresses from developing. Furthermore, the bottom calandria plate and the upper core plate are essentially structurally independent; thereof, vibration of the internals can result in significant relative movement between the supporting connections of the rod guides at their lower and upper ends respectively to the upper core plate and the bottom calandria plate. The wear potential under these circumstances is great.

Thus, split pin connections of conventional types are inappropriate for use as the supporting connections for the top ends of the rod guides since they would wear rapidly, with the result that the top ends of the rod guides would become loose. Rod guides having such loose top end connections are unacceptable because of the rapid rate of wear of the rodlets which would result. Other known mounting devices as well are inappropriate. For example, leaf springs cannot be used to support all of the god ruides because sufficient space is not available within the inner barrel assembly to provide leaf springs of the proper size for the large number of rods guides which are present, even if high strength material is used for the leaf springs.

Beyond the unsuitability of existing, known structural support arrangements, further factors must be taken into account in the consideration of possible designs for the support of the top end of the rod guides within the inner barrel assembly. For example, both the RCC and the WDRC rod clusters should be removable without requiring that the guides be disassembled. The requirement imposes a severe space limitation in view of the dense packing of the guides and their associated rod clusters within the inner barrel assembly. For example, in one such reactor design, over 2,800 rods are mounted in 185 clusters, the latter being received within a corresponding 185 guides. The space limitation is further compounded by the requirement that unimpeded flow holes must be provided in the calandria plates for the core outlet flow. While these foregoing factors severely restrict the available space envelope in the horizontal cross-sectional dimension of the inner barrel assembly, axial or vertical limitations on this space envelope must also be considered. For example, the presence of the support members should not require any increase in the height of the vessel. From a maintenance standpoint, the support members should be visible for inspection and replaceable without undue effort. Additionally, the assembly load of the calandria must be less than its dead weight and must be accomplished without access to the support region. This avoids having to apply force to the calandria before installing the vessel head.

While the supports for the rod guides must therefore satisfy a wide range of structural and functional requirements relating to, or imposed by, the inner barrel assembly itself, a further critical requirement is that the wear potential of the support structure itself must be minimized. This is a critical requirement in view of the potential for intense vibration arising out of the core outlet flow and the development of high contact forces due to differential pressure and both steady state and transient temperature conditions across both the array of rod guides and the individual rod guides.

Conventional reactor designs do not present the support problems attendant the dense packing of rod guides and associated rod clusters in advanced reactor designs of the type herein contemplated.

Thus, it is the principal object of the present invention to provide a solution to the problems of adequately supporting the rod guides.

With this object in view, the present invention resides in a flexible support structure for the upper ends of first and second pluralities of rod guides of respective first (32) and second (28) different types disposed as corresponding, interleaved first and second matrices thereof in parallel axial relationship within an inner barrel assembly (24) of a pressurized water reactor vessel (10) for receiving therein respective, corresponding first (34) and second (30) different types of rod clusters, the inner barrel assembly (24) occupying a central portion of the vessel (10) and being of a vertical height extending from a first plate (19) of a lower elevation to a second plate (52) of a higher elevation, each of said rod guides (32, 28) being of elongated configuration and of an axial length corresponding substantially to the vertical height of said inner barrel assembly (24) and said first (32) and second (28) pluralities of rod guides being disposed in parallel axial relationship in an array of interleaved, respective first and second matrices with the bottom ends thereof affixed to said first plate (19) and the top ends thereof disposed adjacent said second plate (52), characterized by a first matrix of plural top support plates of a first type (38, 38') disposed on and connected to the respective top ends of said first plurality of rod guides of said first type (32), each said top support plate of said first type (38, 38') comprising a unitary structure of plural arm segments (100, 102; 100', 102') in an annular configuration and having a periphery generally corresponding to the configuration of the respectively associated top end of said rod guide of said first type (32) and an interior opening (72, 72') permitting axial passage therethrough of a corresponding rod cluster of said first type (34), said plural arm segments (100, 102; 100', 102') comprising a plurality of successive major arms (100, 100') having corresponding peripheries and the peripheries of successive pairs of adjacent major arms (100, 100') defining a plurality of corresponding exterior vertices; a second matrix of plural top support plates of a second type (36, 36') disposed on and connected to the respective top ends of said second plurality of rod guides of said second type (28), each said top support plate of said second type (36, 36') comprising a unitary structure of plural arm segments (110, 112; 110', 112') having a periphery generally corresponding to the configuration of the top end of said respectively associated rod guides of said second type (28) and an interior opening (70, 70') permitting axial passage therethrough of a corresponding rod cluster of said second type (30), said plural arm segments comprising a plurality of successive major arms (100, 100') having corresponding peripheries and the peripheries of successive pairs of adjacent major arms (100, 100') defining a plurality of corresponding interior vertices, the interior vertices of each said top plate of said second type (36, 36') corresponding to respective, exterior vertices of each said top plate of said first type (38, 38') for receiving a respective, said exterior vertex therein in mating relationship; said first and second matrices of said top plates (38, 36; 38', 36') being assembled in interdigitated relationship with the interior vertices of said top plates of said second type (36, 36') within said array receiving, in mating relationship therein, respectively corresponding exterior vertices of respective, contiguous said top plates of said first type (38, 38'); a linkage connecting position (117, 107') at each vertex of one of said first and second top plates (38, 36; 38', 36') and a linkage connecting position on each of the adjacent major arms (100, 110') of the pair associated with the mating vertex of the other of said first and second top plates; and a flexible linkage (130, 130') interconnecting each said vertex linkage connection position (117, 107') of said one of said first and second top plates (38 and 36; 38' and 36') with said linkage connecting positions (107, 117') on the respective adjacent major arms (100, 110') associated with the mating vertex, as received therein, of the other of said first and second top plates (38 and 36; 38' and 36').

In a preferred embodiment, the flexible linkages are generally of square configuration, each being attached at four places to its respective WDRC guide top plate. Further, each such flexible linkage is attached to each of the four contiguous, surrounding, RCC guide top plates, at four corresponding, individual connections or attachment points. Thus, each WDRC guide is attached, or concatenated, laterally to the four surrounding RCC rod guides via the flexible linkage. This concatenated assembly of linkages creates a stiff structure between the guides in a plane perpendicular to the axis of the rod guides. Thus, the guides are essentially bound together laterally; however, the linkages in the out-of-plane direction, i.e., axially, are flexible and thus accommodate relative axial motion between guides to permit bowing of adjacent guides. This capability of flexibility in one plane must be provided to compensate for local differences in height of adjacent guides due to differential thermal expansion and bowing due to pressure differential across the guide. Thus, the flexible linkages in accordance with the invention will be understood to be flexible in a direction parallel to the axis of the rod guide, but rigid in a plane perpendicular to the axis of the rod guide. It will also be understood that the assemblage of linkages in the concatenated arrangement as well are rigid in the plane perpendicular to the parallel axes of the array of rod guides. Absent this flexibility of the linkages, the linkages would be overstressed and would fail. Further, the flexible linkages are recessed into the top plates to prevent damage during assembly.

Lateral loads exerted on the rod guides are reacted into the calandria either by the calandria extensions or by the leaf springs, at each of the RCC plates. The rod guide leaf springs, as mounted on the calandria plate and pressed against the RCC top plates, generate sufficient lateral frictional force such that fluctuating steady state loads exerted on the guides do not cause slippage. Moreover, the mounting extensions from the calandria provide overall lateral support during events such as seismic, which can exceed the lateral frictional force of the leaf springs, and provide alignment between the rod guides and the calandria, there being one extension for each of the RCC guides. Collectively, the calandria extensions react the seismic loads from the rod guides. Alignment of the RCC clusters in the rod guide top plates further is controlled by the calandria extensions.

The pin stops are located on the top of the WDRC guides and mate with openings provided therefor in the associated four, adjacent RCC guides. The pin stops serve three purposes. First, during assembly of the guides, the pin stops provide rough positioning of adjacent rod guides prior to attachment of the square flexes. Secondly, the pin stops limit the amount of deflection possible along the axis of the flexible linkage, and thereby prevent excessive stress of any individual element due to an unanticipated and transient conditions. Finally, the pin stops provide an ultimate load capacity for very large loads. Essentially, the pin stops have a greater load capability than that of the WDRC guide itself. Proper selection of the material for the pin stop enables the attachment between adjacent guides to have the same or greater lateral load capacity than the rod guide enclosures. This provides a balanced design where the method of attachment of the rod guide is not structurally limiting. By this configuration and arrangement, the rod guide flex support of the invention virtually totally assures that loads on the WDRC rod guides can be transmitted through the RCC rod guide top plates and into the calandria.

Thus, normal operational fluctuating loads are reacted laterally by the frictional forces generated by the leaf springs attached to the calandria and which press onto the tops of the RCC guides. The flexible linkages, moreover, transmit loads from the WDRC guide top plates to the adjacent RCC guide top plates; as a result of this design, impact between the rod guide top plates and the calandria extensions are essentially precluded. A further major advantage of the combined flexible linkage support and leaf spring frictional support is that wear or gap size between the calandria and the rod guides can be virtually ignored due to the continuing ability of the leaf springs to react lateral force components on the rod guides, even in the event of wear of the calandria extensions, and thus to suppress top end lateral motion and correspondingly prevent any increase in the excitation of the rodlets. This assures that rodlet wear does not increase, despite the potential of slippage due to inadvertent wear of the rod guide support, the need for significant gaps to permit assembly, and resultant increased tolerances between adjoining parts. Further, the concatenated interconnections of the flexible linkages distribute loads between adjacent extensions. Additionally, because of the coupled effect of the flexible linkages and the leaf springs, axial core plate vibration and resulting wear are of reduced concern since the leaf springs increase by more than an order of magnitude the allowable wear depth on the calandria extension before alignment between the rodlet clusters and respective rod guides is compromised. Further, regardless of the gap size between the calandria extension and the respective rod guide top plate, the lateral excitation of rodlets within the respective rod guides is not affected.

The invention will become more readily apparent from the following description of a preferred embodiment thereof shown, by way of example only, in the accompanying drawings, wherein:

Figure 1 is an elevational view, partially in cross-section, of a pressurized water reactor of a type with which the flexible rod guide supports of the present invention are intended to be employed;

Figure 2 is a perspective, exploded and partially broken-away, simplified view of RCC and WDRC top plates with associated guide structures and a flexible linkage for interconnecting same, in accordance with a first embodiment of the invention;

Figure 3 is a top plan view of the elements of Figure 2, as assembled;

Figure 4 is an elevational cross-sectional view taken along the line 4—4 in Figure 3;

Figure 5 is an elevational, cross-sectional view taken along the line 5—5 in Figure 3;

Figure 6 is a simplified, perspective view of an RCC rod cluster and associated supporting spider and drive line;

Figure 7 is a simplified, plan view of a WDRC rod cluster and associated spider;

Figure 8 is an elevational, cross-sectional view of a portion of the calandria plate and associated calandria extensions as seen in Figure 1, on an enlarged scale;

Figure 9 is a schematic, top plan view of a portion of the lower calandria plate of Figure 1, illustrating the relationship of RCC and WDRC rod guides and, in hidden lines, the leaf springs and their relative orientations;

Figure 10 is an elevational, cross-sectional view taken in common along the line 10—10 in Figure 9, illustrating the association of the assembled RCC and WDRC top plates with the calandria extensions and the leaf spring engagement therewith, in accordance with the invention; and

Figures 11 and 12 are simplified, top plan and side elevational cross-sectional views of assembled top plates and a flexible linkage interconnecting same, in accordance with a second embodiment of the invention.

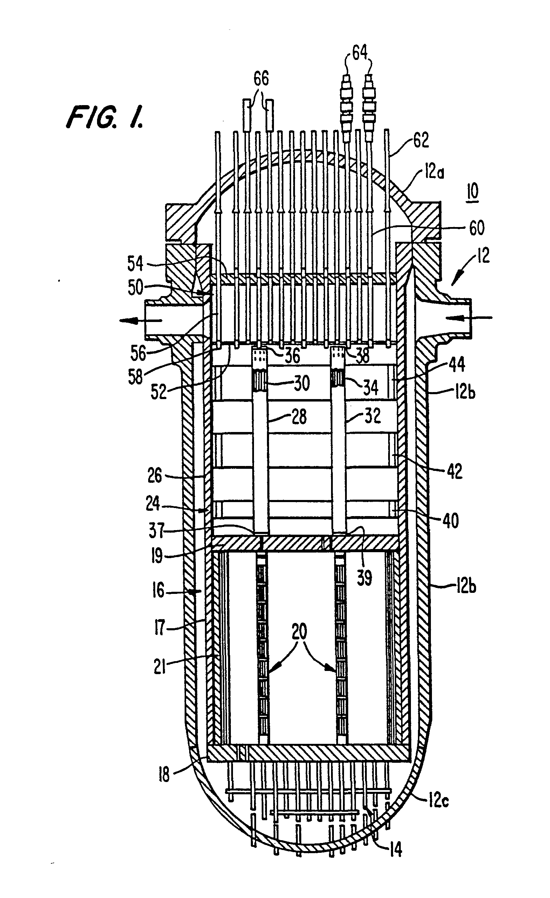

As shown in Figure 1 a pressurized water reactor 10 comprises a vessel 12 of generally conventional configuration including an upper dome 12a, cylindrical sidewalls 12b, and a bottom closure 12c comprising the base of the reactor 10. Within the bottom closure 12c, as schematically indicated, is so-called base-mounted instrumentation 14. The lower barrel assembly 16 comprises a generally cylindrical sidewall 17 affixed at its lower and upper ends to respective lower and upper core plates 18 and 19. Fuel rod assemblies 20 are positioned in generally vertically oriented, parallel axial relationship within the lower barrel assembly 16. A radiation reflection shield 21 is mounted interiorly of the cylindrical sidewalls 17, in conventional fashion.

The inner barrel assembly 24 includes a cylindrical sidewall 26 within which are positioned a plurality of rod guides in closely spaced, parallel axial relationship; for simplicity of illustration, only two such rod guides are shown in Figure 1, namely rod guide 28 housing a cluster of radiation control rods 30 (RCC) and a rod guide 32 housing a cluster of water displacement rods 34 (WDRC). Mounting means 36 and 37 are provided at the respective upper and lower ends of the rod guide 28 and, correspondingly, mounting means 38 and 39 are provided at the respective upper and lower ends of the rod guide 32, and lower end mounting means 37 and 39 mounting the respective rod guides 28 and 32 to the upper core plate 19, and the upper mounting means 36 and 38 mounting the respective rod guides 28 and 32 to a calandria assembly 50.

The calandria assembly 50 includes a lower calandria plate 52, an upper calandria plate 54, and a plurality of parallel axial calandria tubes 56 which are positioned in alignment with corresponding apertures in the lower and upper calandria plates 52 and 54 and to which the calandria tubes 56 are mounted at their respective, opposite ends. Calandria extensions 58 project downwardly from the calandria tubes 56 and connect to corresponding mounting means 36 for the upper ends, or tops, of the RCC rod guides 28. The upper and mounting means 38 associated with the WDRC rod guides 32, in accordance with the present invention, are interconnected by the flexible linkage to the mounting means 36 of the RCC rod guides 28. Thus, the calandria extensions 58 are associated only with the RCC rod guides 28 and not with the WDRC rod guides 32 but serve, through the flexible linkages, to provide both stiff lateral as well as resilient axial support to compensate for relative differences in positioning the rod guide top plates 35 and 38, without overstressing the flexible linkages 130.

Extending upwardly beyond the upper calandria plate 54 and, more particularly, within the dome 12a of the vessel 12, there is provided a plurality of flow shrouds 60 respectively aligned with the calandria tubes 56. A corresponding plurality of head extensions 62 is aligned with the plurality of flow shrouds 60, with respective adjacent ends thereof in generally overlapping relationship. Control rod cluster (RCC) displacement mechanisms 64 and water displacement rod cluster (WDRC) displacement mechanisms 66 are associated with the respective head extensions 62, flow shrouds 60 and calandria tubes 56 which, in turn, are respectively associated with the respective clusters of radiation control rods 30 and water displacement rods 34. Particularly, the RCC and WDRC displacement mechanisms 64 and 66 connect through corresponding lines to the respective clusters of radiation control rods and water displacement rods 30 and 34, to control the respective vertical positions thereof and, particularly, to selectively lower same through corresponding openings (not shown) provided therefore in the upper core plate 19 into surrounding relationship with respectively associated fuel rod assemblies 20. In this regard, the clusters 30 and 34 have an extent of travel represented by the distance $D$ designated in Figure 1. While the particular control function is not relevant to the present invention, insofar as the control over the reaction within the core is effected by the selective positions of the respective rod clusters 30 and 34, it is believed that those skilled in the art will appreciate that moderation or control of the reaction is accomplished in accordance with the extent to which the control rod clusters 30 are inserted into the core and with the effective water displacement adjustment which is achieved by selective positioning of the water displacement rods 34.

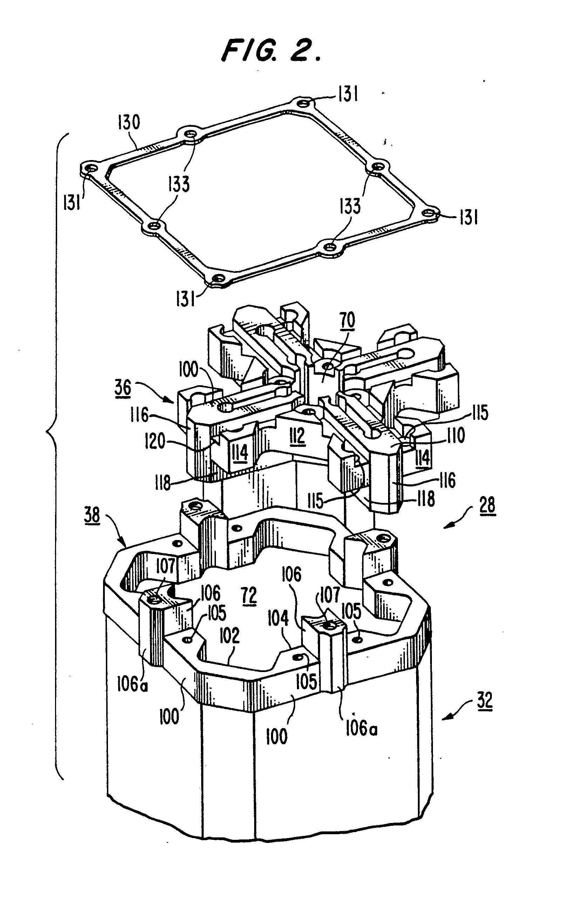

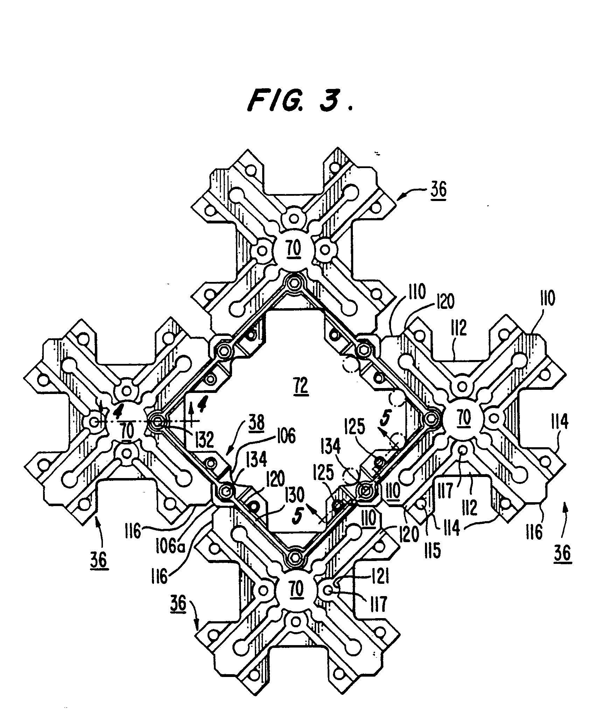

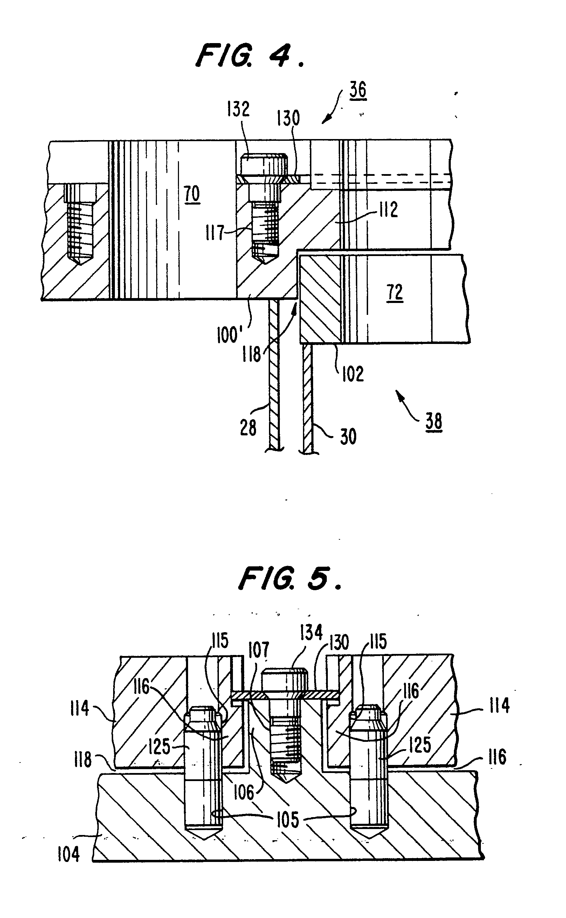

The flexible rod guide support for the inner barrel assembly of a pressurized water reactor in accordance with the invention will be discussed with concurrent reference to Figures 2—5, inclusive. Figure 2 comprises a perspective, exploded and partially broken away view of rod guides and respectively associated top plates, in conjunction with a flexible linkage in accordance with a first embodiment of the present invention. Figure 3 comprising a top plan view of the elements of Figure 2 of an exemplary assemblage of a top plate of a first (WDRC) type, as interdigitized with associated top plates of a second (RCC) type disposed in surrounding, mating relationship therewith and, further, as interconnected by a flexible linkage, all in accordance with the aforesaid first embodiment of the invention. Figure 4 and Figure 5 comprise elevational, cross-sectional views taken along the lines 4—4 and 5—5, respectively, in Figure 3.

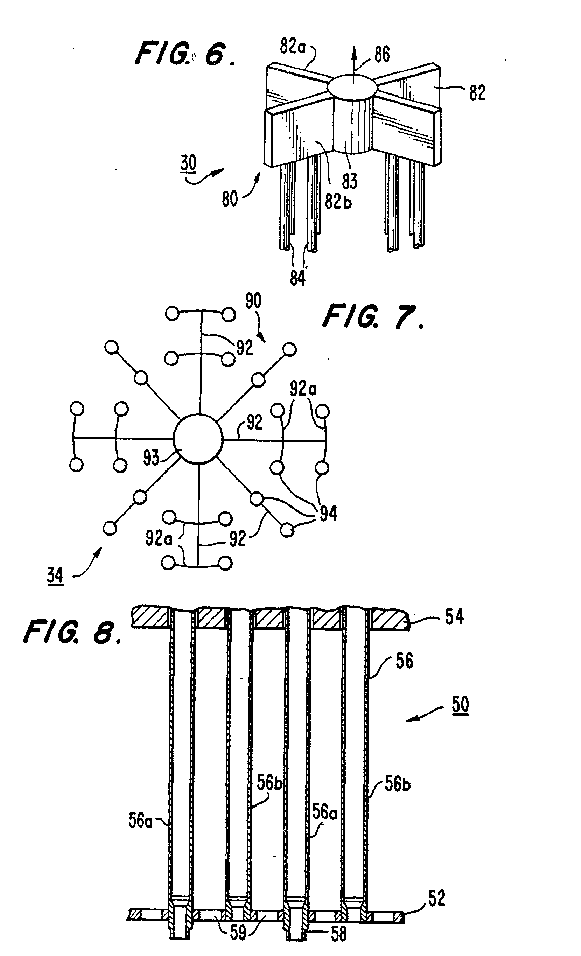

The rod guide 32 for the WDRC rod cluster 34 and the rod guide 28 for the RCC rod cluster 30, as best seen in Figure 2, have first and second, different configurations, and have respectively associated therewith top plates 38 and 36 corresponding to the respective mounting means 38 and 36 diagrammatically illustrated in Figure 1. Each of the rod guides 28 and 32 is formed of sheet metal and each of the respective top plates 36 and 38 is machined to achieve the configurations as illustrated. The peripheries of the top plates 36 and 38 generally correspond to the peripheries of the respective rod guides 28 and 30, as viewed in cross-section taken in a plane transverse to the vertical axes thereof and thus parallel to the plane of Figure 3. The top plates 36 and 38 furthermore have interior channels 70 and 72, respectively, the profiles or boundaries of which correspond to the configuration, again in cross-section, of the corresponding RCC rod clusters 30 and WDRC rod clusters 34, the latter being illustrated in simplified schematic form in Figures 6 and 7, respectively.

In Figure 6, the RCC rod cluster 30, shown in a simplified perspective view, includes a spider 82 comprising a pair of orthogonally related cross arms 82a and 82b interconnected by a central hub 83, a plurality of RCC rodlets or rods 84 depending from the arms 82a and 82b. Particularly, each of the arms 82a and 82b carries four (4) such rods 84. Correspondingly, as best seen in Figure 3, the interior channel 70 of the top plate 36 has a profile corresponding to the RCC rod cluster 30, permitting the latter to be lowered axially through the channel 70 thereof under control of the control rod displacement mechanism 64 (Figure 1) which connects through drive line 86 to the central hub 83 of the spider 82 of the RCC rod cluster 30.

The interior channel 72 of the WDRC top plate 38 likewise has a profile corresponding to the periphery, again in cross-section, of the WDRC rod cluster 34 (Figure 1), the latter being shown in a simplified schematic plan view in Figure 7. The WDRC rod cluster 34 similarly includes a spider 90 having a plurality of radially extending arms 92 connected to a central hub 93; further, alternate ones of the arms 92 include transverse cross arms 92a. A plurality of WDRC rods 94 then are appropriately connected to the arms 92 and 92a and depend therefrom in parallel axial relationship.

From Figure 3, it will be apparent that the respective rod guides 28 and 32 and the associated top plates 36 and 38 are configured so as to permit relatively dense packaging thereof and, more particularly, the assemblage thereof as interdigitized matrices. Particularly, the top plate 38 of the WDRC rod guides 32 is surrounded by a symmetrical, associated sub-array of four RCC top plates 36; further, each of the RCC top plates 36 in turn is configured to engage an associated sub-array of four WDRC top plates 38. While the symmetrical configuration of the respective rod clusters and thus of the corresponding rod guides and associated top plates is a preferred embodiment, alternative configurations are also contemplated as within the scope of the invention, the principal requirement being that interdigitized matrices of the respective rod guides and top plates may be established in a tightly packaged array. The top plates 36 and 38 are now described in detail, with concurrent reference to Figures 2—5, common reference numerals being employed to identify the common elements of the symmetrical portions of the respective, individual structures.

The WDRC top plate 38 is of a generally annular configuration with a generally square periphery and includes four (4) major arms 100, each pair of two (2) adjacent arms 100 extending in perpendicular relationship and the totality of four (4) such pairs defining four (4) major exterior vertices, or corners. A diagonal minor arm 102 spans each such vertex and integrally interconnects the pair of associated, adjacent major arms 100. Inwardly transverse, or lateral, extensions 104 are formed at intermediate positions along the length of each of the major arms 100 displaced from the opposite ends thereof, and integrally join a central, link connection vertical stub 106. An outwardly transverse, or lateral wedge-fit extension 106a is formed on the stub 106, extending beyond the outer sidewall surface, or periphery, of the major arm 100. A link connection threaded bore 107 is formed in each vertical stub 106.

The RCC top plate 36 (best seen in Figure 3) includes a corresponding plurality of four (4) equiangularly displaced major arms 110, the interior peripheral edges of each pair of adjacent arms 110 defining an interior vertex which receives therein a corresponding exterior vertex, or corner, of the top plate 38, as defined by a pair of adjacent major arms 100 thereof. The top plate 36 further includes a diagonal minor arm 112 extending across the geometrical interior vertex defined by the major arms 110, the exterior vertical surface of the arm 112 corresponding to the interior vertical surface of the diagonal minor arm 102 of the top plate 38. Transverse, or lateral extensions 114 extend symmetrically from both sides of the major arms 110, each extension 114 corresponding in size and configuration to the corresponding lateral extension 104 of a top plate 38 associated with the corresponding arm 100. As best seen in Figure 2, the transverse lateral extensions 114 on the respective peripheral edges of a pair of adjacent major arms 110 which define a given interior vertex are continuous with the diagonal minor arm 112, and furthermore the extensions 114 and the included diagonal minor arm 112 have a common planar upper surface, corresponding to the planar upper surface of the major arms 110, but are foreshortened in vertical height relative to that of the major arms 110 such that the lower surfaces thereof define an undercut interior peripheral region, or channel, 118.

The outer end of each major arm 110 furthermore includes a wedge-fit extension 116 generally aligned with the major axis of the corresponding major arm 110. A stop pin bore 115 is formed in each of the transverse lateral extensions 114 of each arm 110 in a position so as to be aligned with the stop pin bore 105 in the corresponding inward lateral extension 104 of a corresponding arm 100 when the top plates 36 and 38 are assembled, as in Figure 3. Further, a link connection threaded bore 117 is formed in the integral juncture 110' of adjacent major arms 110 surrounding the interior channel 70 and defining the interior vertex. A groove 120 further is formed in the associated transverse extensions 114 and the included diagonal minor arm 112, extending along the respectively associated peripheral edges of the associated pair of adjacent major arms 110 and communicating with a counter bore 121 which is coaxial with the threaded bore 117.

The assembled relationship of the top plates 36 and 38 is best understood from the top plan view of Figure 3, taken in conjunction with the vertical cross-sectional views of Figures 4 and 5, the latter taken along the lines 4—4 and 5—5 in Figure 3, respectively. As seen in Figure 4, each diagonal minor arm 102 of the top plate 38 is received within the corresponding diagonal portion of the channel 118 defined by the diagonal minor arm 112 and the integral junction 110' of an adjacent pair of major arms 110, the diagonal minor arm 112 thus being superposed on diagonal minor arm 102. As seen in Figure 5, the transverse lateral extensions 114 are superposed on the respective midside, inward lateral extensions 104 of a given major arm 100 of the top plate 38. As best seen from Figure 3, the free ends of the major arms 110 of two adjacent top plates 36 which bound, or are contiguous with, a common major arm 100 of a top plate 38 are juxtaposed in closely spaced relationship, the respective, aligned wedge-fit extension 116 thereof closely engaging the respective surfaces of the corresponding outward, transverse wedge-fit extension 106a of that associated major arm 100. Stop pins 125 then are positioned in the aligned stop pin bores 105 and 115.

Finally, a flexible linkage 130 is received within the channels 120 of the group of top plates surrounding a given top plate 38, which then is bolted in position. Particularly, bolts 132 are received through the apertures 131 in the corners, or vertices, of the linkage 130 and securely threaded into the corresponding, threaded bores 117 and, further, bolts 134 are received through the apertures 133 in the side arms of the linkage 130 and securely threaded into the corresponding threaded bores 107 in the link connector vertical stubs 106.

Respective matrices of top plates 36 and 38 thus are interdigitized by virtue of the respective structural components defining the mating, interior and exterior vertices thereof and including the channels 118 and the superposed lateral, or transverse, extensions 114 and 104. Further, the top plates are laterally interlocked (i.e., in a plane perpendicular to the axis of the assembly 24) by the flexible linkages 130 in a two dimensional, concatenated relationship in which each of the top plates 38 is linked rigidly in the lateral direction to four respectively surrounding top plates 36—and, in turn, each of the top plates 36 is laterally interlocked at its four interior vertices to associated exterior vertices of four top plates 38 which are interdigitized therewith. It will be appreciated that whereas the interdigitized relationship exists throughout the majority of the array, as is apparent, the outer edges, or the periphery, of the array necessarily will be defined by one or more peripheral edges of either one or the other of the top plates 36 and 38—typically, the top plates 36.

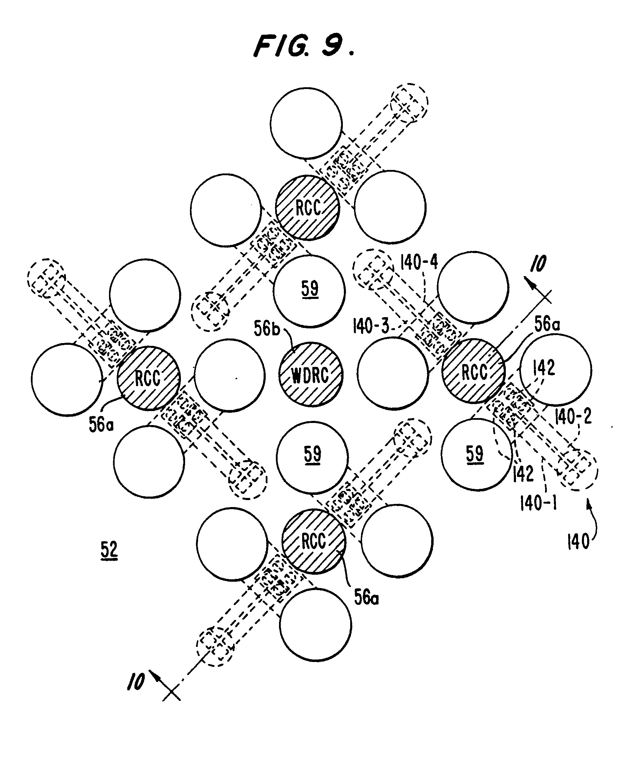

Mounting of the concatenated and interdigitized matrices of top plates 36 and 38, for securing the top ends of the rod guides 28 and 32 in position within the upper end of the inner barrel assembly 24, is achieved by connections provided between the lower calandria plate 52 and the RCC top plates 36. Figure 8 is an enlarged view of the portion of a lower calandria plate 52 and of a broken-away portion of the upper calandria plate 54, illustrating more clearly the association of the calandria tubes 56 and the calandria plates 52 and 54. More specifically, the calandria tubes 56a which are connected at their lower ends to corresponding calandria extensions 58 are associated with the RCC rod clusters and the associated top plates 36. Calandria tubes 56b, on the other hand, are associated with the WDRC rod clusters and the corresponding top plates 38. Provided in the lower calandria plates 52, intermediate the various calandria tubes 56, are flow holes 59 through which the core output flow, exiting upwardly from the inner barrel assembly 24, proceeds through the calandria assembly 50. Corresponding flow holes (not shown) are provided in the upper calandria 54.

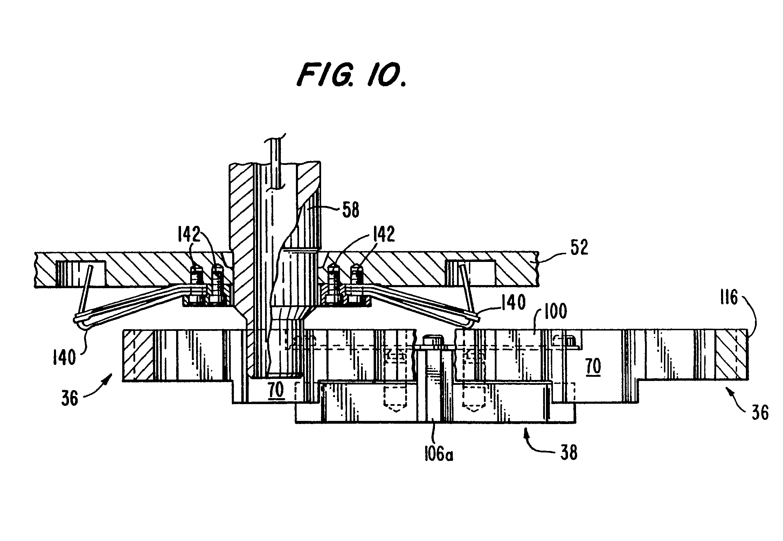

Figure 9 is a top plan view of a portion of the lower calandria plate 52, illustrating (in solid cross-section) the assemblage of calandria tubes 56a and 56b associated with the array of top plates 36 and 38 shown in Figure 3. Figure 10 is a cross-sectional view illustrating the connection of a top plate 36 to the calandria bottom plate 52 by a calandria extension 58. Particularly, the calandria extension 58, of circular cross-section, is received within the corresponding circular cross-sectional channel 70 of an RCC top plate 36, thus establishing lateral stability of the RCC top plate 36; each top plate 36 receives a corresponding calandria extension 58 in its channel 70. Accordingly, the RCC top plates 36 are supported directly, and the interdigitized and concatenated top plates 38 thus are supported through the top plates 36, against lateral movement by the plurality of calandria extensions 58 and ultimately by the lower calandria plate 52.

Figures 9 and 10, taken concurrently, illustrate leaf springs 140 which resiliently load the top surfaces of the top plates 36 of the RCC rod guides 28, and which generate sufficient lateral frictional force such that fluctuating steady state loads applied to the guides do not cause slippage; the springs 140 also compensate for effects of differential thermal expansion and minimize adverse effects of resulting forces due to such thermal expansions. More particularly, the leaf springs 140 are attached to the lower surface of the lower calandria plate 52 by suitable screws 142; as seen better in Figure 9, the leaf springs 140 comprise two parallel pairs 140-1, 140-2 and 140-3, 140-4, for a total of four (4) springs, the first pair of springs 140-1 and 140-2 being aligned with the second pair of springs 140-3 and 140-4 and thus displaced from one another by 180° about the generally circular cross-section of the RCC calandria tube 56a. Moreover, with respect to the matrix of RCC top plates 36 and the corresponding RCC calandria tubes 56a, the leaf springs 140 are rotated by 90° for successive RCC calandria tubes 56a of a given row, the leaf springs 140 for the respective, column-related calandria tubes 56a of successive, adjacent parallel rows being offset by 90°. From Figure 10, the two related pairs of leaf springs 140 extending from a given calandria extension 58 associated with a given top plate 36, at their outer free ends, engage the corresponding end extremities of the upper surfaces of the adjacent, aligned major arms 100 of the aligned and next adjacent RCC top plates 36 (only one of which is shown) at corresponding positions close to the outer, free ends thereof. Further, due to the symmetrical and regular array of calandria tubes 56 and associated extensions 58 with respect to the top plate 38, and the alternating parallel and transverse orientation of the leaf springs 140, it will be apparent that each top plate 36 is engaged by a symmetrically loaded force by corresponding leaf springs at the outer extremities of the aligned, or 180° displaced, major arms 100 so as to maintain a symmetrical or balanced loading force thereon.

The requirements which must be satisfied by the flexible rod guide support structure of the invention, as outlined briefly above, the adverse environmental conditions (e.g., vibration, and both axial and lateral displacement forces) which exist within the inner barrel assembly 24 and the manner in which the flexible rod guide support structure of the present invention accommodates these conditions and satisfies those requirements, as now may be better appreciated, will be discussed, again with reference to Figure 1. Further, as before noted, the flexible support structure of the invention must, itself, not introduce sources of vibration and most significantly must not be susceptible to excessive wear which, over time, would cause the mounting assembly to loosen and eventually permit vibration to ensue.

Particularly, the concatenated and interdigitized matrices of the RCC top plates 36 and WDRC top plates 38 effectively present a single, relatively stiff structure of mutually, or interdependently, supported top plates at the interface of the inner barrel assembly 24 and the lower calandria plate 52, which nevertheless permits a limited extent of relative motion between the rod guides 28 and 32 by out-of-plane bending of the flexible linkages 130. The flexible support structure of the invention furthermore facilitates assembling the rod guides with the calandria extensions 58—which assembly, as before noted, is accomplished by having the RCC top plates 36 receive the calandria extensions 58 within the respective cylindrical internal channels 70 therein. The extent of relative movement between adjacent top plates 36 and 38, as permitted by in-plane tensile elongation of the flexible linkages 130, however, is limited by the stop pins 125 which provide an ultimate load capacity for very large loads. Thus, under very large loads, the stop pins 125 prevent excessive loading of any of the flexible linkages 130 and ensure that loads from the WDRC rod guides 32 are transmitted through the concatenated and interdigitized RCC top plates 36 into the calandria bottom plate 52. The stop pins 125 serve a further function in providing rough positioning of the interdigitized top plates 36 and 38 prior to attachment thereto of the flexible linkages 130.

As previously noted, the leaf springs 140 serve to react normal operational fluctuating loads laterally, by the frictional forces generated by their engagement with the top surfaces of the RCC top plates 36. The leaf springs may be of the type known as 17×17 fuel assembly springs, which are typically employed in conjunction with the fuel rod assemblies 20 in the lower barrel assembly 16. As employed in accordance with the present disclosure, the leaf springs 140 may be designed to react nominally a force of 1725,8 N (388 lbs.) at each RCC guide top plate 36, assuming a coefficient of 0.3 without slippage. More specifically, the nominal force applied to each RCC top plate 36 is 5755,7 N (1,294 lbs.) with a range of 4083,2 N to 6796,5 N (918 lbs. to 1,528 lbs.) Accordingly, assuming a coefficient of friction of 0.3, the lateral force can be nominally as great as 1725,8 N (388 lbs.) before any movement of a given top plate 36 would occur. Differential lateral forces across the array thus may be compensated for and reacted to independently by the corresponding leaf springs 140. The concatenated design particularly precludes impact wear from occurring between the rod guide top plates 36 and 38 and the calandria extensions 58. To the extent that such wear does occur, and particularly relative to the calandria extensions 58, the extent and effect of such wear is believed not significant relative to rod guide alignment or the structural capability of the extensions 58 to react to seismic loads. To the extent the wear relative to a particular extension 58 occurs, in like fashion, the associated leaf springs 140 will continue to maintain both axial and lateral alignment, and to react forces tending to cause lateral displacement, thus limiting the excitation and ultimately wear on the RCC guides 28 and WDRC guides 32 and the respective rodlet clusters 30 and 34.

The concatenated relationship of the interdigitized matrices of the array affords the further significant benefits of distributing force effects via the flexible linkages and compensating for differential axial expansion and lateral forces acting on the array, throughout the entirety of the interdigitized rod guide top plates 36 and 38, and thus minimizing wear potential with respect to any given calandria extension 58 and its respectively associated top plate 36, and of the interface between any given rod guide and its associated rodlet cluster. Thus, the potential of wear due both to axial sliding forces arising, for example, from core plate vibration and as well due to lateral forces resulting from differential thermal and other effects is greatly decreased, and the structure is self-compensating even as to any specific, individual connection with a given calandria extension 58 which has worn due, for example, to initial mechanical misalignment.

As can be appreciated from Figure 10, only minimal axial space is required to accommodate the array of top plates 36 and 38 and the flexible linkages 130 therein, along with the leaf springs 140; this enables use of the flexible rod guide support structure of the invention without requiring any modification of the vessel 10 to accommodate an axially elongated inner barrel assembly 24. As is clear from Figure 9, taken further in the context of Figures 1 and 8, the flexible support structure of the invention does not interfere with the required free passage of core outlet flow through the openings 59 provided therefor in the lower calandria plate 52 (i.e., at which the support structure of the invention presents an interface, as before noted).

While it is preferred to employ a flexible linkage 130 of generally square configuration, alternative configurations are also available and fall within the scope of the invention. For example, two or more individual linkages 130 may be stacked to obtain selectively variable stiffness across the tops of the concatenated support plates. Further, it will be appreciated that each square linkage 130 comprises effectively a unitary assemblage of four individual flexible support linkages of two perpendicular arms each, namely the pair of adjacent linkage arms extending from and including a vertex having a screw hole 131, and through and including the enlarged portions containing the screw holes 133. Thus, four (4) separate linkages so configured could be employed in the alternative to a unitary linkage 130 as shown; while this would simplify manufacture, it would increase the number of parts and connectors required for assembly. The cross-section of the arms of the linkage 130, whether of unitary structure or of individual two-arm linkages as described, may be varied to achieve the desired stiffness. Moreover, rather than being symmetrical, the arms of each individual linkage, or the corresponding arms of a unitary assemblage may have an L-shape (i.e., of equal length arms) or other configuration, in accordance with the configurations of the associated top plates and the related connection positions thereon.

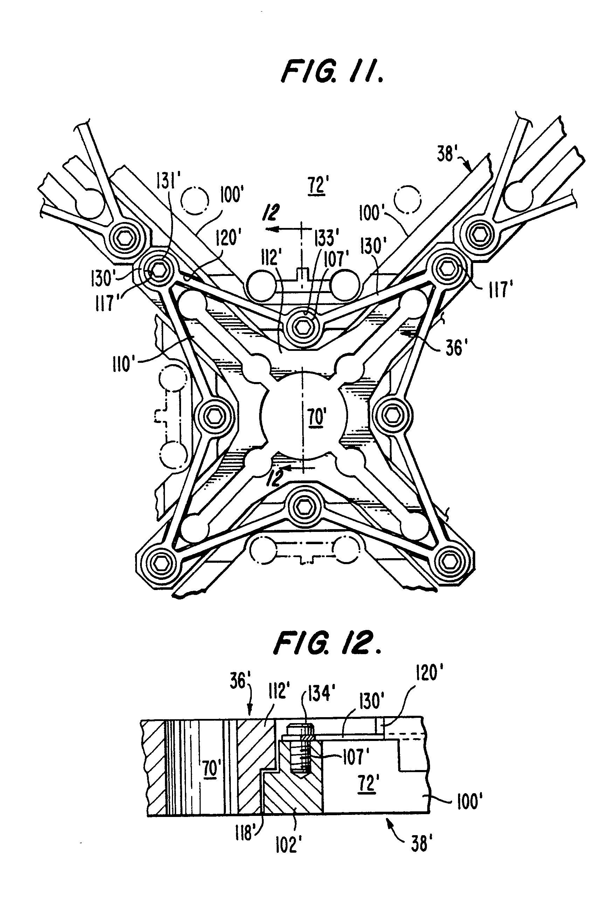

Furthermore, the linkages, while contemplated to have exterior right angle vertices as in the case of the square linkage 130, may have alternative angular vertices, for example as shown in Figures 11 and 12. More particularly, Figure 11 is a schematic and somewhat simplified top plan view of an alternative arrangement of an RCC top plate 36' and a WDRC top plate 38' having an associated flexible linkage 130', Figure 12 comprising an elevational cross-sectional view along the lines 12—12 in Figure 11. The flexible linkage 130' is of star-shaped configuration and is connected to the respective top plates 36' and 38' in somewhat of a reverse orientation of parts, relative to the embodiment of Figures 2—10. Particularly, the adjacent major arms 100' of the WDRC top plate 38' again form an exterior vertex crossed by a diagonal minor arm 102' which is received by a channel 118' such that a diagonal minor arm 112' of the RCC top support 36' is superposed in part on the diagonal minor arm 102' of the WDRC top plate 38' in interdigitized relationship. The diagonal arm 102' in this instance is extended vertically relatively to the height of the major arms 100', in a manner somewhat analogous to the vertical stub extension 106 of the top plate 38 as seen in Figure 2. A groove 120' extends downwardly through the top surface of the major arms 110' and a star-shaped flexible linkage 130' then is received within the grooves. The central aperture 133' of the linkage 130' thus is disposed in alignment with the link connection threaded bore 107' in the diagonal minor arm 102', and the corner apertures 131' of the linkage 130' are disposed in alignment with the respective link connection threaded bores 117', in this instance formed in the extremities of the major arms 110' of the RCC top plate 36'. Although for simplicity of illustration, corresponding bolts are not shown in Figure 11, Figure 12 illustrates a bolt 134' connecting the center aperture 133' of the flexible linkage 130' to the diagonal minor arm 102' of the WDRC top plate 38'. Similar bolts of course would connect the corner apertures of the linkage 130' to the extremities of the major arms 110' of the RCC top plate 36. Thus, each exterior vertex of the WDRC top plate 38' is received in mating engagement within an interior vertex of the RCC top plate 36', as in the first embodiment of the invention, and the same are concatenated by a flexible linkage interconnecting the major arms of one thereof with the major arms of the other, the link connection positions being reversed effectively in the embodiment of Figures 11 and 12, relatively to those of the first embodiment.

**Claims**

1. A flexible support structure for the upper ends of first and second pluralities of rod guides of respective first (32) and second (28) different types disposed as corresponding, interleaved first and second matrices thereof in parallel axial relationship within an inner barrel assembly (24) of a pressurized water reactor vessel (10) for receiving therein respective, corresponding first (34) and second (30) different types of rod clusters, the inner barrel assembly (24) occupying a central portion of the vessel (10) and being of a vertical height extending from a first plate (19) of a lower elevation to a second plate (52) of a higher elevation, each of said rod guides (32; 28) being of elongated configuration and of an axial length corresponding substantially to the vertical height of said inner barrel assembly (24) and said first (32) and second (28) pluralities of rod guides being disposed in parallel axial relationship in an array of interleaved, respective first and second matrices with the bottom ends thereof affixed to said first plate (19) and the top ends thereof disposed adjacent said second plate (52), characterized by

a first matrix of plural top support plates of a first type (38, 38') disposed on and connected to the respective top ends of said first plurality of rod guides of said first type (32), each said top support plate of said first type (38, 38') comprising a unitary structure of plural arm segments (100, 102; 100', 102') in an annular configuration and having a periphery generally corresponding to the configuration of the respectively associated top end of said rod guide of said first type (32) and an interior opening (72, 72') permitting axial passage therethrough of a corresponding rod cluster of said first type (34), said plural arm segments (100, 102; 100', 102') comprising a plurality of successive major arms (100, 100') having corresponding peripheries and the peripheries of successive pairs of adjacent major arms (100, 100') defining a plurality of corresponding exterior vertices;

a second matrix of plural top support plates of a second type (36, 36') disposed on and connected to the respective top ends of said second plurality of rod guides of said second type (28), each said top support plate of said second type (36, 36') comprising a unitary structure of plural arm segments (110, 112; 110, 112') having a periphery generally corresponding to the configuration of the top end of said respectively associated rod guides of said second type (28) and an interior opening (70, 70') permitting axial passage therethrough of a corresponding rod cluster of said second type (30), said plural arm segments comprising a plurality of successive major arms (100, 100') having corresponding peripheries and the peripheries of successive pairs of adjacent major arms (100, 100') defining a plurality of corresponding interior vertices, the interior vertices of each said top plate of said second type (36, 36') corresponding to respective, exterior vertices of each said top plate of said first type (38, 38') for receiving a respective, said exterior vertex therein in mating relationship;

said first and second matrices of said top plates (38, 36, 38', 36') being assembled in interdigitated relationship with the interior vertices of said top plates of said second type (36, 36') within said array receiving, in mating relationship therein, respectively corresponding exterior vertices of respective, contiguous said top plates of said first type (38, 38');

a linkage connecting position (117, 107') at each vertex of one of said first and second top plates (38, 36; 38', 36') and a linkage connecting position on each of the adjacent major arms (100, 110') of the pair associated with the mating vertex of the other of said first and second top plates; and

a flexible linkage (130, 130') interconnecting each said vertex linkage connecting position (117, 107') of said one of said first and second top plates (38 and 36; 38' and 36') with said linkage connecting positions (107, 117') on the respective adjacent major arms (100, 110') associated with the mating vertex, as received therein, of the other of said first and second top plates (38 and 36; 38' and 36').

2. A flexible support as claimed in claim 1, characterized by

a plurality of extensions (58) depending from said second plate (52) and respectively corresponding to said plurality of top plates of said second type (36, 36'); each said top plate of said second type (36, 36') defining a central receiving aperture (70, 70') for receiving a corresponding said depending extension (58) therewithin, thereby to axially align each of said top plates of said second type (36, 36') and the associated said rod guides of said second type (28) within said inner barrel assembly (24).

3. A flexible support as claimed in claim 2, characterized in that there is further provided a plurality of resilient means (140) respectively associated with said top plates of said second type (36, 36'), each said resilient means (140) being secured to said second plate (52) and contacting and exerting a vertically downward force on a respectively associated top plate of said second type (36, 36'), thereby establishing a frictional engaging force opposing lateral displacement of each said top plate of said second type (36, 36') and the rod guide (28) associated therewith from the said axially aligned position thereof.

4. A flexible support as claimed in claim 3, characterized in that

each top plate of said second type (36, 36') includes at least a pair of aligned, first and second said major arms (100, 100'), said pairs of aligned major arms of said plurality of top plates of said second type being disposed in alternating transverse relative relationship in both the row and column directions of said matrix thereof; and

said resilient means (140) associated with each of said top support plates of said second type (36, 36') comprises a pair of first (140-1 and 140-2) and second (140-3 and 140-4) resilient means engaging the extremities of the respective first and second major arms (110; 110') of said aligned pair thereof.

5. A flexible support as claimed in claim 4, characterized in that each of said first (140-1 and 140-2) and second (140-3 and 140-4) resilient means of the pair thereof associated with each given, said top support plate of said second type (36, 36') is a leaf spring disposed in alignment with the respectively associated aligned pair of first and second major arms (110, 110') of said given top plate of said second type (36, 36'), said respective first and second leaf springs being connected at first ends thereof to said second plate (52) at positions adjacent the correspondingly aligned said depending extensions (58) next adjacent the said depending extension (58) received in said given top plate of said second type (36, 36').

6. A flexible support as recited in claim 3, 4 or 5, characterized in that

each said top plate of said first type (38) further comprises a diagonal arm segment (102) extending across each said exterior vertex thereof and integrally interconnecting each pair of major arms (100) associated with the respective said vertex and an inward lateral extension (104) at an intermediate position on each said major arm (100), associated respectively with and displaced from each vertex defined thereby;

each said top plate of said second type (36) further comprises a diagonal arm segment (112) extending across each said interior vertex thereof and integrally connecting said adjacent major arms (110) respectively associated with the respective said vertex, and transverse lateral extensions (114) adjacent the extremity of each of said major arms (110), said transverse lateral extensions (114) and said diagonal arm segment (112) having an upper surface common with the upper surface of said major arms (110) and being of reduced height relatively to the height of said major arms so as to define an undercut channel (118) relatively thereto;

said top plates of said first type (38) being assembled with said top plates of said second type (36) in said interdigitized relationship of said first and second matrices thereof, with said lateral extensions (104) and diagonal arm segment (102) associated with each said exterior vertex of each said top plate of said first type (38) being received in said undercut channel (118) associated with the respective said mating interior vertex of a contiguous said top plate of said second type (36), and thereby having superposed thereon the respective said transverse lateral extensions (114) and diagonal arm segment (112) associated with said respective mating interior vertex of said contiguous top plate of said second type (36).

7. A flexible support as recited in claim 6, characterized in that there is further provided a vertical bore (115) extending through each said superposed transverse lateral extension (114) of said top plates of said second type (38) and a corresponding, aligned bore (105) extending partially through the corresponding lateral extension (104) of said top plate of said first type (38); and

an alignment pin (125) received in each of said aligned bores (115, 105) of the corresponding said superposed transverse extensions (114) of said contiguous top plates of said second type (36) and said lateral extensions (104) of said major arms (100) of said top plate of said first type (38) as received in mating relationship therewith for limiting the extent of lateral displacement therebetween.

8. A flexible support as recited in claim 7, characterized in that

each of said top plates of said first type (38) includes a vertical extension (106) on each of said major arms (100) thereof at a position displaced from each associated exterior vertex defined thereby so as to be disposed adjacent the ends (116) of the adjacent major arms (110) of a top plate of said second type (36) defining an interior vertex in which the said associated exterior vertex is received; and

for each of said mating vertices, said vertex linkage connecting position (117) comprises a threaded bore formed in the junction of said adjacent major arms (110) of said top plate of said second type (33), and each of said adjacent major arm linkage connecting positions (107) comprises a threaded bore formed in the corresponding said vertical extensions (106) on said major arms (100) of said top plate of said first type (38).

9. A flexible support as recited in claim 8, characterized in that

said vertical extensions (106) formed on said major arms (100) of said top plates of said first type (38) have a top surface lower than the top surface of said major arms (110) of said top plates of said second type (36) when assembled in mating relationship therewith; and there is further provided:

a groove (120) in said transverse extensions (114) and said diagonal arm segments (112) of each of said top plates of said second type (36), the bottom of the groove lying in a common plane with the top surface of said vertical extensions (106) when said top plates of said second type (36) are assembled with said top plates of said first type (38) with the respective vertices thereof in mating relationship; and

each said flexible linkage (130) is received within said grooves (120) in said top plates of said second type (36) which are contiguous to and assembled in mating relationship with a given said top plate of said first type (38).

10. A flexible support as recited in any of claims 1 to 9 characterized in that

each said top plate of said first type (38) is of generally square configuration and defines four exterior vertices;

each said top plate of said second type (36) is of generally cross-shaped configuration and defines four interior vertices;

each given top plate of said first type (38) has four top plates of said second type (36) contiguous thereto, an interior vertex of each thereof (i.e., 36) receiving in mating relationship therein a corresponding exterior vertex of said given top plate of said first type (38);

each said flexible linkage (130) is of generally square configuration, corresponding substantially to the dimensions of said top plates of said first type (38), and comprises four continuously connected arms in a generally square configuration, each said flexible linkage being associated with a respective, given said top plate of said first type (38) and rigidly connecting same in a plane transverse to the axis of said assembly and flexibly connecting same in a plane parallel to the axis of said assembly to said four contiguous top plates of said second type (36) assembled in mating relationship therewith.

11. A flexible support as recited in claim 10, characterized in that each of said flexible linkages (130) is connected at the corners thereof to said connecting positions (117) at the respective, mating interior vertices of said four contiguous top plates of said second type (36) and is connected at intermediate positions on the respective arms thereof to respectively corresponding intermediate positions (117) on said major arms (100) of the respective given said top plate of said first type (38).

12. A flexible support as recited in claim 11, characterized in that

each said connecting position (107, 117) comprises a threaded bore; and each said flexible linkage (130) is connected to said connecting positions (107, 117) by bolts (132, 134) received therethrough and in the corresponding said threaded bores (107, 117).

13. A flexible support as recited in claim 1, wherein:

each said top plate of said first type (38') is of generally square configuration and defines four exterior vertices;

each said top plate of said second type (36') is of generally cross-shaped configuration and defines four interior vertices;

each given top plate of said first type (38') has four top plates of said second type (36') contiguous thereto, an interior vertex of each (i.e., 36') thereof receiving in mating relationship therein a corresponding exterior vertex of said given top plate of said first type (38'); characterized in that

each said flexible linkage (130') is of generally star-shaped configuration, corresponding substantially to the configuration and dimensions of said top plates of said second type (36'), and comprises four continuously connected V-shaped arms defining four exterior vertices and four corresponding, interior vertices each thereof intermediate an adjacent pair of said exterior vertices, each said flexible linkage (130') being associated with a respective, given said top plate of said second type (36') and flexibly connecting same to each exterior vertex of a contiguous top plate of the said first type (38') received in a corresponding interior vertex of said given top plate of said second type (36') in mating relationship therewith.

14. A flexible support as recited in claim 13, characterized in that each of said flexible linkages (130') is connected at said four exterior vertices thereof to corresponding connecting positions (117') at the ends of said major arms (110') of said associated top plate of said second type (36') and at each interior vertex thereof to the said exterior vertex of each said contiguous top plate of said first type (38') received in mating relationship therewith.

15. A flexible support as recited in claim 14, characterized in that

each said connecting position (117', 107') comprises a threaded bore; and

each said flexible linkage (130') is connected to said connecting positions by bolts (130', 134') received therethrough and in the corresponding said threaded bores (117', 107').

**Patentansprüche**

1. Eine flexible Tragkonstruktion für die oberen Enden einer Vielzahl erster und zweiter Stabführungen verschiedener erster (32) und zweiter (28) Typen, die so angeordnet sind, wie deren entsprechenden alternierenden ersten und zweiten Matrizen, und zwar in parallel axialer Beziehung zueinander innerhalb eines Trommelaufbaus (24) eines unter Druck stehenden Wasserreaktorkessels (10) zur Aufnahme verschiedener Typen erster (34) und zweiter (30) Stabbündel, wobei der innere Trommelaufbau (24) einen zentralen Bereich des Kessels (10) einnimmt und eine vertikale Höhe aufweist, die von einer ersten Platte (19) einer unteren Erhöhung bis zu einer höher gelegenen zweiten Platte (52) reicht, jede Stabführung (32, 28) länglich gestaltet ist und eine axiale Länge aufweist, die im wesentlichen der vertikalen Höhe des inneren Trommelaufbaus (24) und der Vielzahl der ersten (32) und zweiten (28) Stabführungen entspricht, die axial parallel in einer Reihe von alternierenden ersten bzw. zweiten Matrizen angeordnet und mit ihren unteren Enden an der ersten Platte (19) befestigt und mit den oberen Enden angrenzend an die zweite Platte (52) angeordnet sind,

dadurch gekennzeichnet, daß eine erste Matrize mehrfacher oberer Stützplatten (38, 38') einer ersten Ausführungsform an den entsprechenden Kopfenden der ersten Vielzahl von Stabführungen (32) der ersten Type angeordnet und mit diesen verbunden ist, wobei jede dieser oberen Stützplatten (38, 38') der ersten Ausführungsform aus einheitlich gestalteten mehrfachen Armsegmenten (100, 102; 100', 102') besteht, die ringförmig angeordnet sind und deren Umfang im wesentlichen der Gestaltung dem zugeordneten Kopfende der Stabführung (32) der ersten Type entspricht und bei der eine Innenöffnung (72, 72') vorgesehen ist, die einen axialen Durchlaß für ein entsprechendes Stabbündel (34) der ersten Type bildet, und die Armsegmente (100, 102; 100', 102') aus einer Vielzahl von aufeinanderfolgenden entsprechend konturierten Hauptarmen (100, 100') bestehen, wobei die Konturen der aufeinanderfolgenden Paare angrenzender Hauptarme (100, 100') eine Vielzahl entsprechender Aussenscheitel begrenzen;

eine zweite Matrize mit mehrfachen oberen Stützplatten (36, 36') einer zweiten Ausführungsform vorgesehen ist, die an den entsprechenden Kopfenden der zweiten Vielzahl von Stabführungen (28) der zweiten Type angeordnet und mit diesen verbunden ist, wobei jede der oberen Stützplatten (36, 36') der zweiten Ausführungsform aus einheitlich gestalteten mehrfachen Armsegmenten (110, 112; 110', 112') besteht, deren Umfang im wesentlichen der Gestaltung des Kopfendes der entsprechenden zugeordneten Stabführungen (28) der zweiten Type entspricht und eine Innenöffnung (70, 70') aufweist, die einen axialen Durchlaß eines entsprechenden Stabbündels (30) der zweiten Type gestattet, die vielfachen Armsegmente aus einer Vielzahl von aufeinanderfolgenden, entsprechend konturierten Hauptarmen (100, 100') bestehen, wobei die Konturen aufeinanderfolgender Paare angrenzender Hauptarme (100, 100') eine Vielzahl entsprechender Innenscheitel begrenzen und die Innenscheitel einer jeden oberen Platte (36, 36') der zweiten Ausführungsform den Aussenscheiteln einer jeden oberen Platte (38, 38') der ersten Ausführungsform entsprechen, derart, daß die entsprechenden Aussenscheitel genau hineinpassen;

die ersten und zweiten Matrizen der oberen Platten (38, 36; 38', 36') innerhalb der Reihe ineinandergreifend angeordnet sind, derart, daß die Innescheitel der oberen Platten (36, 36') der zweiten Ausführungsform an die entsprechenden Aussenscheitel der oberen Platten (38, 38') der ersten Ausführungsform anstossen;

eine Gelenkverbindungsstelle (117, 107') an jedem Scheitel der ersten und zweiten oberen Platten (38, 36; 38', 36') sowie eine Gelenkverbindungsstelle an jedem Paar der angrenzenden Hauptarme (100, 110') vorgesehen ist, das dem anstossenden Scheitel der anderen ersten und zweiten oberen Platten zugeordnet ist; und

eine flexible Gelenkverbindung (130, 130') die an jedem Scheitel vorgesehene Gelenkverbindungsstelle (117, 107') der entsprechenden ersten und zweiten oberen Platten (38 und 36; 38' und 36') mit den Gelenkverbindungsstellen (107, 117') an den entsprechenden dem anstossenden Scheitel zugeordneten angrenzenden Hauptarmen (100, 110') der anderen ersten und zweiten Platten miteinander verbindet.

2. Eine flexible Tragkonstruktion nach Anspruch 1, dadurch gekennzeichnet, daß von der zweiten Platte (52) eine Vielzahl von Ansätzen (58) absteht, entsprechend der Vielzahl der oberen Platten (36, 36') der zweiten Ausführungsform, jede dieser Platten (36, 36') eine zentrale Ausnehmung (70, 70') zur Aufnahme eines entsprechenden abstehenden Ansatzes (58) aufweist, um jede der oberen Platten (36, 36') der zweiten Ausführungsform und der zugeordneten Stabführungen (28) der zweiten Type innerhalb des Trommelaufbaus (24) auszurichten.

3. Eine flexible Tragkonstruktion nach Anspruch 2, dadurch gekennzeichnet, daß eine weitere Vielzahl elastischer Elemente (140) den oberen Platten (36, 36') der zweiten Ausführungsform zugeordnet ist, wobei jedes elastische Element (140) an der zweiten Platte (52) befestigt ist und die entsprechende zugeordnete obere Platte (36, 36') der zweiten Ausführungsform berührt und auf diese eine vertikal nach unten gerichtete Kraft ausübt und dabei eine reibende Berührungskraft bewirkt, die der seitlichen Verschiebung jeder oberen Platte (36, 36') der zweiten Ausführungsform und der zugeordneten Stabführung (28) aus der axialen Ausrichtung entgegenwirkt.

4. Eine flexible Tragkonstruktion nach Anspruch 3, dadurch gekennzeichnet, daß jede obere Platte (36, 36') der zweiten Ausführungsform mindestens ein Paar fluchtender erster und zweiter Hauptarme (100, 100') aufweist, die fluchtenden Hauptarmpaare der Vielzahl der oberen Platten der zweiten Ausführungsform alternierend querlaufend zueinander sowohl in Reihenals auch in Säulenrichtungen der Matrize angeordnet sind; und

jedes der entsprechenden oberen Tragplatte (36, 36') der zweiten Ausführungsform zugeordnete elastische Element (140) aus einem Paar erster (140-1 und 140-2) und zweiter (140-3 und 140-4) elastischer Glieder besteht, die die äußeren Enden der entsprechenden ersten und zweiten Hauptarme (100, 100') des fluchtenden Paares berühren.

5. Eine flexible Tragkonstruktion nach Anspruch 4, dadurch gekennzeichnet, daß jedes der ersten (140-1 und 140-2) und zweiten (140-3 und 140-4) elastischen Glieder des Paares, das der gegebenen oberen Stützplatte (36, 36') der zweiten Ausführungsform zugeordnet ist, aus einer Blattfeder besteht, die mit dem entsprechenden zugeordneten fluchtenden Paar der ersten und zweiten Hauptarme (110, 110') der oberen Platte (36, 36') der zweiten Ausführungsform ausgerichtet angeordnet ist, wobei die entsprechenden ersten und zweiten Blattfedern an ihren ersten Enden mit der zweiten Platte (52) verbunden sind, und zwar angrenzend an die entsprechenden ausgerichteten abstehenden Ansätze (58), die als nächste an den abstehenden Ansatz (58) grenzen, der in der gegebenen oberen Platte (36, 36') der zweiten Ausführungsform aufgenommen ist.

6. Eine flexible Tragkonstruktion nach Anspruch 3, 4 oder 5, dadurch gekennzeichnet, daß jede obere Platte (38) der ersten Ausführungsform ferner ein diagonales Armsegment (102) aufweist, das sich über jeden Aussenscheitel erstreckt und jedes, dem entsprechenden Scheitel zugeordnete Hauptarmpaar (100) integrierend verbindet, und in einer Mittelstellung an jedem Hauptarm (100) ein innerer Seitenansatz (104) vorgesehen und jedem dabei bestimmten Scheitel zugeordnet und von diesem verschoben ist;

jede obere Platte (36) der zweiten Ausführungsform ferner ein diagonales Armsegment (112) aufweist, das sich über jeden Innenscheitel erstreckt und die angrenzenden, dem entsprechenden Scheitel zugeordneten Hauptarme (110) integrierend verbindet, und angrenzend an das äußere Ende eines jeden Hauptarmes (110) querliegende Seitenansätze (114) vorgesehen sind, die mit dem diagonalen Armsegment (112) und mit den Hauptarmen (110) eine gemeinsame Oberfläche haben, wobei ihre Höhe geringer ist als die Höhe der Hauptarme, derart, daß ein unterschnittener Kanal (118) gebildet ist; die oberen Platten (38) der ersten Ausführungsform mit den oberen Platten (36) der zweiten Ausführungsform in alternierender Beziehung zu den ersten und zweiten Matrizen zusammengesetzt sind, wobei die Seitenansätze (104) und das diagonale Armsegment (102), zugeordnet jedem Aussenscheitel einer jeden oberen Platte (38) der ersten Ausführungsform, in den unterschnittenen Kanal (118) eingesetzt sind, der dem entsprechenden anstossenden Innenscheitel einer benachbarten oberen Platte (36) der zweiten Ausführungsform zugeordnet ist, auf der die entsprechenden querlaufenden Seitenansätze (114) und diagonalen Armsegmente (112), die dem entsprechenden anstossenden Innenscheitel der benachbarten oberen Platte (36) der zweiten Ausführungsform zugeordnet sind, aufliegen.

7. Eine flexible Tragkonstruktion nach Anspruch 6, dadurch gekennzeichnet, daß ferner durch jeden aufliegenden, querlaufenden Seitenansatz (114) der oberen Platten (36) der zweiten Ausführungsform eine vertikale Bohrung (115) vorgesehen ist, und eine entsprechende fluchtende Bohrung (105) sich teilweise durch den entsprechenden Seitenansatz (104) der oberen Platte (38) der ersten Ausführungsform erstreckt; und

ein Ausrichtstift (125) in jede der fluchtenden Bohrungen (115, 105) der entsprechenden aufeinanderliegenden querlaufenden Ansätze (114) der benachbarten oberen Platten (36) der zweiten Ausführungsform und der oberen Seitenansätze (104) der Hauptarme (100) der oberen Platten (38) der ersten Ausführungsform gesteckt ist, um deren seitliche Verschiebung zu begrenzen.

8. Eine flexible Tragkonstruktion nach Anspruch 7, dadurch gekennzeichnet, daß an jedem Hauptarm (100) einer oberen Platte (38) der ersten Ausführungsform ein vertikaler Ansatz (106) an einer Stelle angeordnet ist, die von jedem zugeordneten Aussenscheitel versetzt ist, derart, daß er angrenzend an die Enden (116) der benachbarten Hauptarme (110) einen oberen Platte (36) der zweiten Ausführungsform zu liegen kommt, die einen Innenscheitel begrenzen, in der der zugeordnete Aussenscheitel eingepasst ist; und

daß für jeden der anstossenden Scheitel die Scheitel-Gelenkverbindungsstelle (117) eine Gewindebohrung aufweist, die am Stosspunkt der angrenzenden Hauptarme (110) der oberen Platte (38) der ersten Ausführungsform angeordnet ist, und jeder der Gelenkverbindungsstellen (107) der angrenzenden Hauptarme eine Gewindebohrung in den entsprechenden vertikalen Ansätzen (106) an den Hauptarmen (100) der oberen Platte (38) der ersten Ausführungsform aufweist.

9. Eine flexible Tragkonstruktion nach Anspruch 8, dadurch gekennzeichnet, daß in zusammengebauten Zustand die vertikalen Ansätze (106) an den Hauptarmen (100) der oberen Platten (38) der ersten Ausführungsform eine Oberfläche aufweisen, die tiefer liegt als die Oberfläche der Hauptarme (110) der oberen Platten (36) der zweiten Ausführungsform; und ferner

eine Nut (120) in den querlaufenden Ansätzen (114) und den diagonalen Armsegmenten (112) einer jeden oberen Platte (36) der zweiten Ausführungsform vorgesehen ist, deren Boden in einer gemeinsamen Ebene mit der Oberfläche der vertikalen Ansätze (106) liegt, wenn die oberen Platten (36) der zweiten Ausführungsform mit den oberen Platten (38) der ersten Ausführungsform mit den eingepassten Scheiteln zusammengebaut sind; und

jede elastisches Gelenkverbindung (130) in den Nuten (120) in den oberen Platten (36) der zweiten Ausführungsform eingesetzt ist, die angrenzend an eine und mit Paßsitz mit einer gegebenen oberen Platte (38) der ersten Ausführungsform zusammengebaut ist.

10. Eine flexible Tragkonstruktion nach einem der Ansprüche 1 bis 9, dadurch gekennzeichnet, daß

jede der oberen Platten (38) der ersten Ausführungsform im wesentlichen quadratisch ist und vier Aussenscheitel aufweist;

jede obere Platte (36) der zweiten Ausführungsform im wesentlichen kreuzförmig gestaltet ist und vier Innenscheitel aufweist;

jede gegebene obere Platte (38) der ersten Ausführungsform vier angrenzende obere Platten (36) der zweiten Ausführungsform hat, wobei ein Innenscheitel einer jeden Platte (36) einen entsprechenden Aussenscheitel der gegebenen oberen Platte (38) der ersten Ausführungsform mit Paßsitz aufnimmt;

jede elastische Gelenkverbindung (130) im wesentlichen quadratisch ist und im wesentlichen den Dimensionen der oberen Platten (38) der ersten Ausführungsform entspricht und vier kontinuierlich verbundene Arme in einer im wesentlichen quadratischen Anordnung aufweist, jeder der elastischen Gelenkverbindungen einer entsprechenden oberen Platte (38) der ersten Ausführungsform zugeordnet ist und diese starr in einer quer zur Achse der Anordnung verlaufenden Ebene und federnd in einer parallel zur Achse der Anordnung verlaufenden Ebene mit den vier mit Paßsitz zusammengebauten benachbarten oberen Platten (36) der zweiten Ausführungsform verbindet.

11. Eine flexible Tragkonstruktion nach Anspruch 10, dadurch gekennzeichnet, daß jede der elastischen Gelenkverbindungen (130) an ihren Ecken mit den Verbindungsstellen (117) an den entsprechenden anstossenden Innenscheiteln der vier benachbarten oberen Platten (36) der zweiten Ausführungsform verbunden ist, und zwar an Mittelstellungen entsprechender Arme, um Mittelstellungen (117) an den Hauptarmen (100) der gegebenen oberen Platte (38) der ersten Ausführungsform zu entsprechen.

12. Eine flexible Tragkonstruktion nach Anspruch 11, dadurch gekennzeichnet, daß jede Verbindungsstelle (107, 117) eine Gewindebohrrung aufweist; und jede elastische Gelenkverbindung (130) mit den Verbindungsstellen (107, 117) durch Schraubenbolzen (132, 134) verbunden ist, die durch die entsprechenden Gewindebohrungen (107, 117) eingedreht sind.

13. Eine flexible Tragkonstruktion nach Anspruch 1, dadurch gekennzeichnet, daß jede obere Platte (38') der ersten Ausführungsform im wesentlichen quadratisch gestaltet ist und vier Aussenscheitel aufweist;

jede obere Platte (36') der zweiten Ausführungsform im wesentlichen kreuzförmig gestaltet ist und vier Innenscheitel aufweist;

jede gegebene obere Platte (38') der ersten Ausführungsform vier benachbarte obere Platten (36') der zweiten Ausführungsform hat, ein Innenscheitel jeder dieser Platten (36') einen entsprechenden Aussenscheitel der gegebenen oberen Platte (38') der ersten Ausführungsform mit Paßsitz aufnimmt; dadurch gekennzeichnet, daß

jede elastische Gelenkverbindung (130') im wesentlichen sternförmig gestaltet ist und im wesentlichen der Gestaltung und den Dimensionen der oberen Platten (36') der zweiten Ausführungsform entspricht, und vier kontinuierlich verbundene V-förmige Arme aufweist, die vier Aussenscheitel und vier entsprechende Innenscheitel bestimmen, wobei die Innenscheitel zwischen einem angrenzenden Paar von Aussenscheiteln liegen, jede der elastischen Gelenkverbindungen (130') einer entsprechenden gegebenen oberen Platte (36') der zweiten Ausführungsform zugeordnet und diese federnd mit jedem Aussenscheitel einer benachbarten oberen Platte (38') der ersten Ausführungsform verbindet, die mit Paßsitz in einem entsprechenden Innenscheitel der gegebenen oberen Platte (36') der zweiten Ausführungsform aufgenommen ist.

14. Eine flexible Tragkonstruktion nach Anspruch 13, dadurch gekennzeichnet, daß jede der elastischen Gelenkverbindungen (130') an seinen vier Aussenscheiteln mit entsprechenden Verbindungsstellen (117') an den Enden der Hauptarme (110') der zugeordneten oberen Platte (36') der zweiten Ausführungsform und an jedem Innenscheitel mit dem Aussenscheitel einer jeden benachbarten oberen Platte (38') der ersten Ausführungsform, die mit Paßsitz ineinandergreifen, verbunden ist.

15. Eine flexible Tragkonstruktion nach Anspruch 14, dadurch gekennzeichnet, daß jede Verbindungsstelle (117', 107') eine Gewindebohrung aufweist; und

jede elastische Gelenkverbindung (130') mit den Verbindungsstellen durch Schraubenbolzen (130', 134') verbunden ist, die in die entsprechenden Gewindebohrungen (117', 107') eingedreht sind.

**Revendications**

1. Structure de support flexible des extrémités supérieures d'une première et d'une deuxième pluralités de guides de barres respectivement d'un premier (32) et d'un deuxième (28) types différents disposés en un premier et un deuxième damiers correspondants imbriqués en relation axialement parallèle dans un ensemble (24) de l'enveloppe intérieure d'une cuve (10) de réacteur à eau sous pression pour recevoir un premier (34) et un deuxième (30) types différents de grappes de barres, l'ensemble (24) de l'enveloppe intérieure occupant la partie centrale de la cuve (10) et ayant une hauteur comprise entre une première plaque (19) à un niveau bas et une deuxième plaque (52) à un niveau haut, chacun des guides (32, 28) de barres ayant une configuration allongée et une longueur axiale qui correspond sensiblement à la hauteur de l'ensemble (24) de l'enveloppe intérieure et ces première (32) et deuxième (28) pluralités de barres de guidage étant placées axialement parallèlement dans un réseau d'un premier et d'un deuxième damiers respectifs imbriqués, leurs extrémités inférieures étant fixées à la première plaque (19) et leurs extrémités supérieures étant disposées près de la deuxième plaque (52), caractérisée par

un premier damier d'une pluralité de plaques supérieures de support d'un premier type (38, 38') disposées sur et reliées aux extrémités supérieures respectives de la première pluralité de guides de barres du premier type (32), chacune de ces plaques supérieures de support du premier type (38, 38') comprenant une structure unitaire de plusieurs segments de côtés (100, 102; 100', 102') disposés en une configuration annulaire et dont la périphérie correspond dans son ensemble à la configuration de l'extrémité supérieure respectivement associée du guide de barres du premier type (32) et une ouverture intérieure (72, 72') permettant le passage axial d'une grappe correspondante de barres du premier type (34), ces segments de côtés (100, 102; 100', 102') comprenant une pluralité de côtés principaux successifs (100, 100') ayant des périphéries correspondantes et les périphéries de paires successives de côtés principaux contigus (100, 100') formant une pluralité de sommets extérieurs correspondants;

un deuxième damier d'une pluralité de plaques supérieures de support d'un deuxième type (36, 36') disposées sur et reliées aux extrémités supérieures de la deuxième pluralité de guides de barres du deuxième type (28), chacune de ces plaques supérieures de support du deuxième type (36, 36') comprenant une structure unitaire de plusieurs segments de bras (110, 112; 110', 112') dont la périphérie correspond dans son ensemble à la configuration de l'extrémité supérieure des guides de barres respectivement associés du deuxième type (28) et une ouverture intérieure (70, 70') permettant le passage axial d'une grappe correspondante de barres du deuxième type (30), ces segments de bras comprenant une pluralité de bras principaux successifs (100, 100') ayant des périphéries correspondantes et les périphéries de paires successives de bras principaux contigus (100, 100') formant une pluralité de sommets intérieurs correspondants, les sommets intérieurs de chaque plaque supérieure du deuxième type (36, 36') correspondant aux sommets extérieurs respectifs de chaque plaque supérieure du premier type (38, 38') afin de recevoir un sommet extérieur respectif de manière à se correspondre;

ces premier et deuxième damiers des plaques supérieures (38, 36; 38', 36') étant assemblés de manière à s'imbriquer, les sommets intérieurs des plaques supérieures du deuxième type (36, 36') dans le réseau recevant de manière à se correspondre les sommets extérieurs respectivement correspondants des plaques supérieures respectives contiguës du premier type (38, 38');

un point (117, 107') de liaison à chaque sommet de l'une des première et deuxième plaques supérieures (38, 36; 38', 36') et un point de liaison sur chacun des bras principaux contigus (100, 110') de la paire associée au sommet correspondant de l'autre des première et deuxième plaques supérieures; et

une liaison flexible (130, 130') reliant chaque point (117, 107') de liaison au sommet de l'une des première et deuxième plaques au sommet de l'une des première et deuxième plaques supérieures (38 et 36; 38' et 36') aux points (107, 117') de liaison sur les bras principaux contigus respectifs (100, 110') associés au sommet correspondant, lorsqu'il est reçu, de l'autre des première et deuxième plaques supérieures (38 et 36; 38' et 36').

2. Support flexible suivant la revendication 1, caractérisé par une pluralité de rallonges (58) suspendues à la deuxième plaque (52) et correspondant respectivement à la pluralité de plaques supérieures du deuxième type (36, 36'); chaque plaque supérieure de ce deuxième type (36, 36') formant un passage central (70, 70') pour recevoir une rallonge correspondante suspendue (58), de manière à aligner axialement chacune de ces plaques supérieures du deuxième type (36, 36') et les guides de barres associés du deuxième type (28) dans l'ensemble (24) de l'enveloppe intérieure.

3. Support flexible suivant la revendication 2, caractérisé en ce qu'il comprend en outre une pluralité de moyens élastiques (140) associés respectivement à ces plaques supérieures du deuxième type (36, 36'), chacun de ces moyens élastiques (140) étant fixé à la deuxième plaque (52) et étant en contact avec et exerçant une force verticalement dirigée vers le bas sur une plaque supérieure respectivement associée de ce deuxième type (36, 36'), créant de ce fait une force de contact de frottement s'opposant au déplacement latéral de cette plaque supérieure du deuxième type (36, 36') et du guide (28) de barres qui lui est associé à partir du point axialement aligné.

4. Support flexible suivant la revendication 3, caractérisé en ce que

chaque plaque supérieure du deuxième type (36, 36') comprend au moins une paire de premiers et deuxièmes côtés principaux alignés (100, 100'), ces paires de côtés principaux alignés de cette pluralité de plaques supérieures du deuxième type étant disposées alternativement transversalement à la fois aux sens des rangées et des colonnes du damier; et

le moyen élastique (140) associé à chacune des plaques supérieures de support du deuxième type (36, 36') comprend une paire de premiers (140-1 et 140-2) et deuxièmes (140-3 et 140-4) moyens élastiques en contact respectivement avec les extrémités des premier et deuxième bras (110; 110') de la paire alignée de bras.

5. Support flexible suivant la revendication 4, caractérisé en ce que chacun des premiers (140-1 et 140-2) et deuxièmes (140-3 et 140-4) moyens élastiques de cette paire, associé à chaque plaque supérieure donnée de support du deuxième type (36, 36') est un ressort à lames placé dans l'alignement de la paire alignée respectivement associée de premier et de deuxième bras principaux (110, 110') de la plaque supérieure donnée du deuxième type (36, 36'), ces premiers et deuxièmes ressorts à lames respectifs étant reliés à leurs premières extrémités à la deuxième plaque (52) en des points contigus aux rallonges suspendues également alignées (58) à côté de la rallonge suspendue (58) reçue dans la plaque supérieure donnée du deuxième type (36, 36').

6. Support flexible suivant les revendications 3, 4 ou 5, caractérisé en ce que

chaque plaque supérieure du premier type (38) comprend en outre un côté secondaire diagonal (102) se prolongeant transversalement à chaque sommet extérieur de la plaque et reliant en une seule pièce chaque paire de côtés principaux (100) associées à ce sommet respectif et un prolongement latéral 104 dirigé vers l'intérieur à un point intermédiaire sur chaque côté principal (100), respectivement associé à et espacé de chaque sommet formé;

chaque plaque supérieure du deuxième type (36) comprend en outre un bras secondaire diagonal (112) allant d'un côté à l'autre du sommet intérieur de la plaque et reliant en une seule pièce les bras principaux contigus (110) respectivement associés au sommet correspondant, et des prolongements latéraux transversaux (114) contigus à l'extrémité de chacun des bras principaux (110), ces prolongements latéraux transversaux (114) et le bras secondaire diagonal (112) ayant une face supérieure commune avec la face supérieure des bras principaux (110) et ayant une hauteur réduite par rapport à la hauteur des bras principaux afin de former un passage dégagé (118) par rapport à ceux-ci;

les plaques supérieures du premier type (38) étant assemblées avec les plaques supérieures du deuxième type (36) dans une relation d'imbrication du premier et du deuxième damiers de ces plaques, les prolongements latéraux (104) et le côté secondaire diagonal (102) associés à chaque sommet extérieur de chaque plaque supérieure du premier type (38) étant reçus dans le passage dégagé (118) associé au sommet intérieur correspondant respectif d'une plaque supérieure contiguë du deuxième type (36), et sur lesquels sont de ce fait superposés les prolongements latéraux transversaux (114) et le bras secondaire diagonal 112 associés au sommet intérieur correspondant respectif de la plaque supérieure contiguë du deuxième type (36).

7. Support flexible suivant la revendication 6, caractérisé en ce qu'il comprend en outre un trou vertical (115) traversant chaque prolongement latéral transversal superposé (114) des plaques supérieures du deuxième type et un trou aligné correspondant (105) traversant partiellement le prolongement latéral correspondant (104) de la plaque supérieure du premier type (38); et

une goupille (125) d'alignement logée dans chacun des trous alignés (115, 105) des prolongements transversaux superposés correspondants (114) des plaques supérieures contiguës du deuxième type (36) et des prolongements latéraux (104) des bras principaux (100) de la plaque supérieure du premier type (38) reçus de manière correspondante afin de limiter la portée du déplacement latéral entre eux.

8. Support flexible suivant la revendication 7, caractérisé en ce que

chacune des plaques supérieures du premier type (38) comprend un bloc vertical (106) sur chacun de ses côtés principaux (100) en un point distant de chaque sommet extérieur associé formé par ces côtés, de manière à se trouver contigu aux extrémités (116) des bras principaux contigus (110) d'une plaque supérieure du deuxième type (36) formant un sommet intérieur dans lequel est reçu le sommet extérieur associé; et

pour chacun de ces sommets correspondants, le point (117) de liaison des sommets comprend un trou taraudé percé dans la jonction des bras principaux contigus (110) de la plaque supérieure du deuxième type (33) et chacun des points (107) de liaison des côtés principaux contigus comprend un trou taraudé percé dans les blocs verticaux correspondants (106) formés sur ces côtés principaux (100) de la plaque supérieure du premier type (38).

9. Support flexible suivant la revendication 8, caractérisé en ce que

les blocs verticaux (106) formés sur les côtés principaux (100) des plaques supérieures du premier type (38) ont une face supérieure plus basse que la face supérieure des bras principaux (110) des plaques supérieures du deuxième type (36) lorsqu'elles sont assemblées de manière à se correspondre; et en ce qu'il comprend en outre:

une rainure (120) formée dans les prolongements transversaux (114) et les bras secondaires diagonaux (112) de chacune des plaques supérieures du deuxième type (36), le fond de la rainure se trouvant dans le même plan que la face supérieure des blocs verticaux (106) lorsque les plaques supérieures du deuxième type (36) sont assemblées avec les plaques supérieures du premier type (38), les sommets respectifs de ces plaques se correspondant; et

chaque liaison flexible (130) est reçue dans ces rainures (120) des plaques supérieures du deuxième type (36) qui sont contiguës et assemblées de manière à se correspondre avec une plaque supérieure donnée du premier type (38).

10. Support flexible suivant l'une quelconque des revendications 1 à 9, caractérisé en ce que

chaque plaque supérieure du premier type (38) a une configuration carrée dans son ensemble et forme quatre sommets extérieurs;

chaque plaque supérieure du deuxième type (36) a une configuration en croix dans son ensemble et forme quatre sommets intérieurs;

à chaque plaque supérieure donnée du premier type (38) sont contiguës quatre plaques supérieures du deuxième type (36), un sommet intérieur de chacune de ces dernières (c'est-à-dire les plaques 36) recevant de manière à former une paire un sommet extérieur correspondant de cette plaque supérieure donnée du premier type (38);

chaque liaison flexible (130) a une configuration carrée dans son ensemble, correspondant sensiblement aux dimensions des plaques supérieures du premier type (38), et comprend quatre côtés formant une liaison continue de manière à présenter une configuration carrée dans son ensemble, chaque liaison flexible étant associée à une plaque supérieure respective donnée du premier type (38) et reliant rigidement cette plaque supérieure dans un plan transversal à l'axe de l'assemblage, mais la reliant de manière flexible dans un plan parallèle à l'axe de cet assemblage, à quatre plaques supérieures contiguës du deuxième type (36) assemblées de manière à correspondre avec elle.

11. Support flexible suivant la revendication 10, caractérisé en ce que chaque liaison flexible (130) est reliée, à ses quatre coins, aux points (117) de liaison prévus aux sommets intérieurs correspondants respectifs des quatre plaques supérieures contiguës du deuxième type (36) et est reliée, aux points intermédiaires de ses côtés respectifs, aux points intermédiaires respectivement correspondants (117) des côtés principaux (100) de la plaque supérieure respective donnée du premier type (38).

12. Support flexible suivant la revendication 11, caractérisé en ce que

chaque point (107, 117) de liaison se compose d'un trou taraudé; et chaque liaison flexible (130) est reliée aux points (107, 117) de liaison par des boulons (132, 134) reçus à travers ces points et passés dans les trous taraudés correspondants (107, 117).

13. Support flexible suivant la revendication 1, dans lequel:

chaque plaque supérieure du premier type (38') a une configuration carrée dans son ensemble et forme quatre sommets extérieurs;

chaque plaque supérieure du deuxième type (36') a une configuration en croix dans son ensemble et forme quatre sommets intérieurs;

à chaque plaque supérieure donnée du premier type (38') sont contiguës quatre plaques supérieures du deuxième type (36'), un sommet intérieur de chacune de ces dernières (c'est-à-dire les plaques 36') recevant de manière à former une paire un sommet extérieur correspondant de cette plaque supérieure donnée du premier type (38'); caractérisé en ce que

chaque liaison flexible (130') a une configuration en étoile dans son ensemble, correspondant sensiblement à la configuration et aux dimensions des plaques supérieures du deuxième type (36'), et comprend quatre bras en V en liaison continue formant quatre sommets extérieurs et quatre sommets intérieurs correspondants situés chacun entre une paire de sommets extérieurs contigus, chaque liaison flexible (130') étant associée à une plaque supérieure correspondante donnée du deuxième type (36') et reliant celle-ci de manière flexible à chaque sommet extérieur d'une plaque supérieure contiguë du premier type (38') reçu dans un sommet intérieur correspondant de la plaque supérieure donnée du deuxième type (36') de manière à former une paire avec lui.

14. Support flexible suivant la revendication 13, caractérisé en ce que chacune des liaisons flexibles (130') est reliée, à ses quatre sommets extérieurs, à des points correspondants (117') de liaison prévus aux extrémités des bras principaux (110') de la plaque supérieure associée du deuxième type (36') et, à chaque sommet intérieur de celle-ci, au sommet extérieur de chaque plaque supérieure contiguë du premier type (38') reçu de manière à former une paire avec lui.

15. Support flexible suivant la revendication 14, caractérisé en ce que

chaque point (117', 107') de liaison se compose d'un trou taraudé; et

chaque liaison flexible (130') est reliée aux points de liaison par des boulons (132', 134') reçus à travers ces points et passés dans les trous taraudés correspondants (117', 107').

# FIG. I.

# FIG. 2.

# FIG. 3.

## FIG. 4.

## FIG. 5.

*FIG. 6.*

*FIG. 7.*

*FIG. 8.*

## FIG. 9.

FIG. 10.

EP 0 225 740 B1

# FIG. 11.

# FIG. 12.